# EUROPÄISCHE PATENTSCHRIFT

(11) **EP 0 614 935 B1**
(45) Veröffentlichungstag und Bekanntmachung des Hinweises auf die Patenterteilung: **23.12.1998**
(21) Anmeldenummer: 94101114.0
(22) Anmeldetag: 26.01.1994
(51) Int. Cl.: C08K 7/02, C08L 23/10, B29B 15/12, B29C 70/10

(54) **Thermoformbares, faserverstärktes Verbundmaterial, Verfahren zu seiner Herstellung und Verwendung**
Thermo-formable, fibre-reinforced composite material, process for its production and use thereof
Matériau composite renforcée de fibres thermoformable, méthode de fabrication et son utilisation

(30) Priorität: 02.02.1993 DE 4302782
(43) Veröffentlichungstag der Anmeldung: 14.09.1994
(73) Patentinhaber: Ticona GmbH, 65451 Kelsterbach (DE)
(72) Erfinder: Skaletz, Detlef, Dr., D-55128 Mainz (DE); Czyborra, Ludger, Dr., D-52064 Aachen (DE); Heckel, Horst, D-64285 Darmstadt (DE); Mehmke, Karin, Dr., D-60316 Frankfurt (DE)

(56) Entgegenhaltungen:
- EP-A- 0 056 703
- EP-A- 0 360 430
- EP-A- 0 364 829
- WO-A-90/01519
- WO-A-92/21493

## Beschreibung

Die vorliegende Erfindung betrifft ein thermoformbares Verbundmaterial mit einer Matrix aus elastomer-modifiziertem Polypropylen und einem Gehalt an Verstärkungsfasern.

Nach dem Verfahren der EP-B 56703 (ICI) wird durch einen Pultrusionsprozeß ein faserverstärkter, in der Hitze verformbarer Verbundwerkstoff gewonnen, der thermoplastisches Polymer und mindestens 30 Vol.-% parallel ausgerichtete Verstärkungsfäden enthält. Das Verfahren soll es ermöglichen, konventionelle thermoplastische Werkstoffe zum Imprägnieren von Fasersträngen einzusetzen. Das Verfahren eignet sich jedoch nicht mehr für Polymere, die bei der Verarbeitungstemperatur eine hohe Viskosität (oberhalb 100 Ns/m²) aufweisen, weil eine Benetzung von Fasersträngen mit solchen Schmelzen im Pultrusionsverfahren ohne besondere Vorkehrungen nicht mehr möglich ist.

Im Handel sind Verbundmaterialien verfügbar, deren Matrix aus Polypropylen und deren Verstärkungsfasern z.B. aus Glasfaser bestehen. Diese Materialien sind in Pellet-Form, aber auch in Form von Endlosfäden im Handel. Die Materialien lassen sich preiswert herstellen und besitzen ein gutes Recyklierverhalten. Leider haben diese Materialien eine schlechte Haftung zu Lacken.

Eine gute Haftung der Lackierung ist beispielsweise beim Einsatz von faserverstärkten Verbundwerkstoffen im Automobilbereich und hier speziell bei den hochbelasteten Bauteilen für den Außenbereich unabdingbar. Da die Lackierung möglichst preisgünstig sein soll, sind aufwendige Vor- und Zwischenbehandlungsschritte von Nachteil.

Es besteht daher weiterhin ein Bedarf an einem thermoformbaren, verstärkten Verbundwerkstoff, der bei möglichst vollständiger Benetzung der Fasern durch das Matrixpolymer ausreichend gute mechanische Eigenschaften und gutes Rezyklierverhalten besitzt und zusätzlich eine möglichst gute Haftung für Lacke gewährleistet.

Der vorliegenden Erfindung liegt somit die Aufgabe zugrunde, einen faserverstärkten Verbundwerkstoff bereit zu stellen, der insbesondere eine gute Lackierbarkeit gewährleistet.

Gegenstand der Erfindung ist ein thermoformbares, faserverstärktes Verbundmaterial mit einem Gehalt von 5 bis 70 Vol.-% an unidirektional ausgerichteten Verstärkungsfasern mit einer Länge von mindestens 3 mm und Einzelfilament-Durchmessern von 7 bis 30 µm, die durch eine Matrix eines thermoplastischen Polymers verbunden sind, das im wesentlichen die gesamte Oberfläche der Einzelfilamente benetzt. Dieses Verbundmaterial ist dadurch gekennzeichnet, daß das thermoplastische Polymer ein elastomer-modifiziertes Polypropylen ist.

Vorzugsweise besteht das elastomer-modifizierte Polypropylen aus einer Mischung, d.h. einem Blend von Polypropylen mit thermoplastischem Ethylen-Propylen-Dien-Kautschuk (EPDM) und/oder Ethylen-Propylen-Kautschuk (EPM).

Vorteilhafterweise beträgt der Anteil an EPDM und/oder EPM im elastomer-modifizierten Polypropylen 2 bis 40 Gew.-%, vorzugsweise 5 bis 30 Gew.-%.

Vorzugsweise liegen die Einzelfilament-Durchmesser der Verstärkungsfasern im Bereich von 7 bis 24 µm. Der Volumenanteil der Verstärkungsfasern beträgt vorzugsweise 15 bis 50 Vol.-%.

Bei den Verstärkungsfasern handelt es sich im allgemeinen um solche aus Glas, Kohlenstoff, Aramid, Metall, Keramik und/oder andere hinreichend temperaturbeständige Fasern aus Polymermaterial.

Dem erfindungsgemäßen thermoformbaren, faserverstärkten Verbundmaterial können übliche Füllstoffe, Flammschutzmittel, Gleitmittel sowie Farbpigmente und/oder weitere üblicherweise bei der Verarbeitung von elastomermodifiziertem Polypropylen verwendete Hilfsstoffe zugesetzt werden.

Ein wesentlicher Vorteil des erfindungsgemäßen Faserverbundwerkstoffs ist seine sehr hohe Haftung zu Lacken, wie sie beispielsweise im Automobilaußenbereich verwendet werden. Daher kann auf eine zusätzliche Vorbehandlung der zu lackierenden Bauteiloberfläche, wie etwa Beflammen, Plasma- oder Coronabehandlung, verzichtet werden.

Die unpolare Oberfläche der Polypropylen-Blends macht einen Lackierprozeß aufwendig. Gute Lackhaftung erfordert neben gründlicher Reinigung der Teile meist eine zusätzliche Vorbehandlung durch Beflammen, Plasma- oder Coronabehandlung (Ch. Gruner et al., Kunststoffe 82 (1992) 802). Hohe Anteile an EPDM verbessern zwar die Haftkraft bestimmter Lackbindemittel verringern aber gleichzeitig die mechanische Stabilität. Wenn man als Füllstoff Talkum einsetzt, wird die Lackhaftung verbessert (Kunststoffe 82, 803) dagegen nicht wenn man als Füllstoff kurze Glasfasern (unter 0,5 mm) einsetzt.

In dem erfindungsgemäßen Verbundmaterial sind die Verstärkungsfasern mit mindestens 3 mm wesentlich länger als 0,5 mm und im wesentlichen parallel zueinander angeordnet. Es ist überraschend, daß sich die erfindungsgemäßen Verbundmaterialien lackieren lassen und dafür sogar eine Vorbehandlung nicht erforderlich ist.

Aufgrund der günstigen Haftungseigenschaften verbunden mit sehr guten mechanischen Eigenschaften, wie hohe Steifigkeit und Zähigkeit, ist das erfindungsgemäße Verbundmaterial im besonderen Maße zur Herstellung solcher Formteile aus verstärktem Kunststoff geeignet, die rezyklisierbar und auf einfache Weise aber gut haftend lackierbar sein sollen. So besteht beispielsweise im Karosseriebau sowohl aus optischen Gründen wie auch zur Erhöhung der Kratzfestigkeit oder Chemikalien- und Witterungsbeständigkeit ein steigender Bedarf an lackierfähigen faserverstärkten Kunststoffmaterialien.

Da die erfindungsgemäßen Verbundmaterialien diese Anforderungen in hervorragender Weise erfüllen, besteht ein weiterer Gegenstand der vorliegenden Erfindung in der Verwendung dieser Materialien zur Herstellung von lackierbaren Formteilen, insbesondere für den Automobilbau.

In geschnittener Form werden die erfindungsgemäßen Verbundmaterialien im allgemeinen durch Spritzguß, Blasformen, Extrusion oder Pressen oder Mischverfahren davon zu Formteilen, beispielsweise zu Karosseriebauteilen, verarbeitet. Dabei können ihnen Polypropylen, PP/EPDM oder PP/EPM in faserfreier oder kurzfaserverstärkter Form oder Mischungen dieser Komponenten zugesetzt werden. Unter Kurzfaserverstärkung versteht man in diesem Zusammenhang die Verstärkung durch kurze Fasern von maximal 0,5 mm Länge. Diese Fasern sind also deutlich kürzer als die Abmessungen des erfindungsgemäßen Verbundmaterials, dessen Pellets und somit dessen Fasern Längen von mindestens 3 mm, vorzugsweise mindestens 9 mm aufweisen.

Daneben kann man aus dem erfindungsgemäßen Verbundmaterial, sofern es in Form von Endlosbändern vorliegt, gewickelte Formteile herstellen.

Es gibt eine Reihe unterschiedlich zusammengesetzter elastomer-modifizierter Polypropylen-Blends, die sich unter anderem durch das Molekulargewicht und damit die Schmelzviskosität unterscheiden. Das erfindungsgemäße Verbundmaterial kann man nach an sich bekannten Verfahren, insbesondere nach dem Pultrusionsverfahren aus Matrixpolymer und Verstärkungsfaser herstellen. Ein solches Pultrusionsverfahren ist z.B. für niedrige Schmelzviskositäten in EP-B 56703 offenbart.

Bei einem Verfahren zur Herstellung eines erfindungsgemäßen thermoformbaren, faserverstärkten Verbundmaterials werden eine Vielzahl von Endlosfäden mit einzelnen Filament-Durchmessern von 7 bis 30 µm in Form eines Bandes parallel angeordnet und gespannt und das Fadenband mit aufgeschmolzenem elastomermodifiziertem Polypropylen in einem Schmelz-Pultrusionsverfahren imprägniert, wobei man das Fadenband über mindestens 2 beheitzte Spreizeroberflächen zieht. Im erstarrenden Fadenband wird dabei ein Volumenanteil von 5 bis 70 Vol.-% an Endlosfäden eingestellt.

Falls die Schmelzviskosität des verwendeten Polypropylen-Blends hoch ist, insbesondere im Bereich von 105 bis 2500 Pa • s (gemessen bei niedrigen Schergeschwindigkeiten) liegt, so ist es vorteilhaft, wenn man die Zugspannung der Endlosfilamente beim Einlaufen in die erste Spreizeroberfläche auf 5 bis 50 N pro 4000 Einzelfilamente einstellt. Auf diese Weise läßt sich trotz der hohen Viskosität eine gute Benetzung und Imprägnierung erzwingen. Ein wesentlicher wirtschaftlicher Vorteil dieser Verfahrensausgestaltung besteht darin, daß man die Geschwindigkeit des Fadenbandes auf mindestens 3 m pro Minute erhöhen kann, ohne daß sich die Benetzung und Imprägnierung der Einzelfilamente verschlechtert. Es ist ferner vorteilhaft, wenn die Zugspannung beim Abziehen des imprägnierten Fadenbandes von der letzten Spreizeroberfläche mindestens 50 N pro 4000 Einzelfilamente beträgt.

Das so hergestellte Pultrusionsmaterial kann man in 3 bis 100 mm lange Stücke (Pellets), insbesondere von 10 bis 50 mm Länge zerkleinern. Die Länge der Verstärkungsfasern stimmt mit der Länge der so erzeugten Pellets überein.

Ein Verfahren zur Herstellung von Verbundwerkstoffen nach einem Pultrusionsverfahren unter Verwendung eines Polymers mit einer Schmelzviskosität von 105 bis 2500 Pa • s ist Gegenstand der nicht vorveröffentlichten EP-A-579047 (= DE-A-42 23241.4).

Aus wirtschaftlichen Gründen ist eine Imprägniergeschwindigkeit von 3 bis 40 m/min, vorzugsweise von 10 bis 30 m/min, bevorzugt. Die Viskosität der Schmelze liegt vorzugsweise im Bereich von 130 bis 2000 Pa • s, insbesondere 130 bis 500 Pa • s.

Die Zugspannung beim Abziehen des imprägnierten Fadenbandes von der letzten Spreizeroberfläche ist i.a. höher als die Zugspannung beim Einlaufen in die erste Spreizeroberfläche und beträgt vorzugsweise mindestens 50 N pro 4.000 Einzelfilamente.

Es ist günstig, wenn die Geometrie der Spreizeroberflächen so ausgestaltet wird, daß die durch Spreizeroberflächen und einlaufendes Band definierten Zwickel mit Schmelze gefüllt sind und das Bündel der Endlosfäden nicht in direktem Kontakt mit der Förderöffnung für die Schmelze gebracht wird. Die Zuführung des geschmolzenen Polymers kann an einer beliebigen Stelle der Imprägniervorrichtung erfolgen, sofern die Fasern diese Stelle nicht berühren. Die Spreizeroberflächen sind vorzugsweise wellenförmig ausgebildet. Durch die erzeugte Schlepp- und überlagerte Druckströmung in der Imprägniervorrichtung wird zwischen letzter Spreizeroberfläche und Austrittsöffnung der Imprägniervorrichtung im allgemeinen ein Druck von mindestens 1,5 bar aufgebracht, der stets für eine vollständige Füllung der Imprägniervorrichtung sorgt.

Der Volumenanteil an Fasern im Halbzeug kann durch Einstellen der Förderrate der Polymerschmelze in Relation zur Filamentgeschwindigkeit beeinflußt werden. Ferner können durch Lochbleche überflüssige Anteile von Polymerschmelze abgestreift werden.

Die beim erfindungsgemäßen Verfahren benötigten parallel unidirektional orientierten Verstärkungsfäden, die aus vielen Filamenten bestehen, werden von Faserspulen (Rovings) unter Regelung der Abzugskraft abgespult. Diese Regelung kann mechanisch, mechanisch-physikalisch, elektrisch oder elektronisch erfolgen. Üblicherweise liegt diese direkt aufgebrachte Abzugsvorspannung im Bereich von 10 N bis etwa 25 N, je nach Art der verwendeten Rovings und Stärke der Fasern.

Es hat sich herausgestellt, daß die einmal eingestellte Abzugsspannung vorteilhafterweise möglichst konstant gehalten werden soll.

Eine Apparatur, die sich u.a. dazu eignet, um auf mechanische Weise die Abzugsspannung konstant zu halten, ist Gegenstand des deutschen Gebrauchsmusters 9 107 510.0 (Bolenz & Schäfer Maschinenfabrik GmbH).

Die Vorspannung kann, falls erforderlich, durch Einfügen von einem oder mehreren weiteren Spannstabpaaren zwischen Spule und Imprägniervorrichtung weiter erhöht werden. Dabei bleibt die zeitliche als auch die Roving-abhängige Konstanz der Vorspannung gewährleistet.

Durch die Anzahl, den Durchmesser und die den Umschlingungswinkel bestimmende Position der Spannstäbe läßt sich die zum Transport der Filamente benötigte Abzugsspannung in weiten Grenzen verändern. Dabei steigt die Spannung ausgehend von der Spule in Richtung Bremssystem, Leitorgan/Kämmen bis zu den Umlenkstäben vor der 1. Spreizeroberfläche immer weiter an. Nach Benetzen des Fadens nimmt (in Richtung Aufwickelspule für Verbundmaterial) die Spannung weiter zu.

Die so parallel ausgerichteten und vorgespannten Fasern laufen nun in die Imprägniervorrichtung, beim Schmelze-Pultrusionsverfahren insbesondere eine Imprägnierdüse, ein. Zur Beschleunigung des Durchsatzes können die Fasern vorgeheizt werden. Dabei haben sich Temperaturen bis 100 K unter bzw. über der Verarbeitungstemperatur der Schmelze bewährt. Das Aufheizen der Filamente kann durch Infrarot-, Kontakt-, Strahlungs-, Dampf-, Wasser- oder Heißgasvorwärmung erfolgen.

Vorrichtungen mit Spreizeroberflächen zur Imprägnierung von Fasermaterial sind bekannt. Aus US-A-4 439 387 ist eine Extruder-Apparatur bekannt, bei der mehrere Faserstränge an unterschiedlichen Stellen, die in Transportrichtung der Masse hintereinander angeordnet sind, in das mit Polymerschmelze gefüllte Innere der Apparatur eingezogen und dort mit Schmelze imprägniert werden. Die Spreizeroberfläche 212, 214 und 216 sollen dabei die Benetzung der Faserstränge mit Schmelze verbessern.

Eine Apparatur, die sich gut zur Durchführung des erfindungsgemäßen Verfahrens eignet, ist in US-A-4 957 422 beschrieben. Auf die in der dort abgebildeten Fig. 1 dargestellte Schikane (b) im Einlaufteil (1) der Apparatur (vor Benetzen mit Schmelze) kann bei erfindungsgemäßen Verfahren verzichtet werden.

Die verwendeten Imprägniervorrichtung ist vorzugsweise im wesentlichen geschlossen, so daß der Zutritt von Luftsauerstoff und die damit verbundene thermooxydative Schädigung des Polymers klein gehalten werden kann. Innerhalb der Imprägniervorrichtung werden die Fasern vorzugsweise über mindestens drei Spreizeroberflächen gezogen. Diese sind wellenförmig ausgebildet.

Mit einer breiten Imprägnierdüse kann man eine Vielzahl von einzelnen Fadenbändern gewinnen. Bei Verwendung einer Breitschlitzdüse kann man auch die Gesamtheit der benetzten Fadenbänder zu einem einzigen Band kombinieren und dieses anschließend einem Glättwalzwerk zuführen. Die Breitschlitzdüse kann z. B. Schlitzhöhen zwischen 0,15 bis 5, insbesondere 0,4 bis 2 mm aufweisen. Die Teilstränge können durch kontrollierte Walzensysteme geformt werden und z. B. einen rechteckigen, elliptischen oder kreisförmigen Querschnitt erhalten.

Herstellbar sind Halbzeuge in Form von endlosen, breiten Bändern (Tapes) bis zu 500 mm, bevorzugt 100 bis 320 mm, und Dicken zwischen 0,2 und 0,7 mm, weiterhin Profile in einem weiten Abmessungsbereich (flach 25 x 0,25 mm, 5 x 0,4 mm, 2,5 x 0,8 mm usw., Rundprofile bis zu Durchmessern von etwa 5 mm) ein- oder mehrsträngig gefahren, oder Stränge mit Durchmessern bis zu 5 mm, die anschließend zu Längenabschnitten (Pellets) von 3 bis 100 mm, bevorzugt 10 bis 50 mm geschnitten werden können. Auch diese Stränge sind als einzelnes Halbzeug oder in einer Anzahl von 150 Strängen parallel und simultan herstellbar.

Die Erfindung wird durch die Beispiele näher erläutert.

### Beispiele

### Beispiel 1

Ein Fadenband aus E-Glasfasern (handelsüblich, kompatible Schlichte) wurde mit einer hohen Zugspannung (22 N/4000 Einzelfäden, gemessen beim Einlaufen in die erste Spreizeroberfläche) mit geschmolzenem PP/EPDM (Extruderblend PPT 8027 der Hoechst AG) bei 255°C pultrudiert (Geschwindigkeit des Fadenbandes 11 m/min). Die Schmelze hatte eine Viskosität von ca. 700 Pa • s. Der EPDM-Anteil des eingesetzten PP/EPDM betrug ca. 15 Gew.-%. Durch Veraschung des erhaltenen Produktes ergab sich ein Glasgehalt von 51,2 Gew.-%. Der erhaltene imprägnierte Faserstrang wurde in 10 mm lange Stücke (Pellets) geschnitten.

### Beispiel 2 (Vergleichsbeispiel)

Das Beispiel 1 wurde wiederholt, jedoch mit Polypropylen als Matrixpolymer. Die Schmelze hatte eine Viskosität von 370 Pa • s. Durch Veraschung des Produktes wurde ein Glasgehalt von 49,2 Gew.-% ermittelt. Der erhaltene imprägnierte Faserstrang wurde in 10 mm lange Pellets geschnitten.

Durch Spritzguß wurden jeweils aus den Pellets Prüfkörper gewonnen, an denen die mechanischen Kenndaten bestimmt wurden. Diese sind in der folgenden Tabelle 1 dargestellt. Für den Spritzguß wurde eine Spritzgußmaschine von NETSTAL [offene Düse und Rückstromsperre, Schließkraft von 130 t, 3-Zonen-Schnecke (9D, 6D, 6D) mit einem Schneckendurchmeser von 40 mm und einem Kompressionsverhältnis von 1,83] eingesetzt. Die Spritzgußbedingungen waren folgende: Zylindertemperatur: 210 bis 240°C, Massetemperatur: 245 bis 250°C, Werkzeugtemperatur: 70°C, Schneckendrehzahl: 50 bis 70 rpm, spezifischer Spritzdruck: 1700 bar, spezifischer Staudruck: 110 bar, Einspritzgeschwindigkeit: 45 bis 60 mm/s, Nachdruckzeit: 15 bis 20 s, Kühlzeit: 30 s.

**Tabelle 1**

| Eigenschaft | Einheit | Prüfmethode | Werte für Beispiel 1 | Werte für Beispiel 2 |
|---|---|---|---|---|
| Zugfestigkeit | N/mm² | DIN 53455 | 84 | 115 |
| Zug-E-Modul | N/mm² | DIN 53457 | 8490 | 10500 |
| Reißdehnung | % | DIN 53455 | 2,4 | 1,7 |
| Biegefestigkeit | N/mm² | DIN 53452 | 157 | 205 |
| Biege-E-Modul | N/mm² | DIN 53457 | 9600 | 11100 |
| Kerbschlagzähigkeit Izod | kJ/m² | ISO 180/1A | 20 | 21 |
| Schlagzähigkeit Charpy | kJ/m² | ISO 179/1eU | 50 | 52 |

### Beispiel 3

Aus den Pellets gemäß Beispiel 1 sowie aus den Pellets gemäß Beispiel 2 wurden durch Spritzguß Platten hergestellt, die lackiert wurden. Nach Beflammen als Vorbehandlung wurde hierfür zunächst ein 2-Komponenten Lösungsmittel-Primer der Nr. 63270 und danach ein 2-Komponenten Lösungsmittel-Uni-Decklack der Nr. U 1240 jeweils von der Firma Wörwag, (Stuttgart) aufgebracht.

Bei den Platten des Vergleichsbeispiels zeigten sich eine Vielzahl von Stippen auf der Oberfläche, die wahrscheinlich durch Aufstellen der Fasern bzw. durch Benetzungsfehler entstanden, während die Oberfläche der Platten aus Material von Beispiel 1 glatt waren.

Für die Lackhaftung (Gitterschnittprüfung nach DIN 53 151:
Bewertungsskala von GT 0 bis GT 5 für abnehmende Haftung) ergab sich für Beispiel 1 ein Wert von GT 0 und für das Vergleichsbeispiel ein solcher von GT 5.

Die Tabelle 1 zeigt, daß die bessere Lackierbarkeit nicht durch schlechte mechanische Eigenschaften erkauft wird, sondern daß bei guten Zähigkeiten und besserer Reißdehnung, die Festigkeit und insbesondere die Steifigkeit (E-Modul) in akzeptablen Bereichen bleiben.

### Beispiel 4

Beispiel 1 wurde wiederholt, jedoch wurde als elastomer-modifiziertes PP/EPDM das Extruderblend PPT 8018 B der Hoechst AG eingesetzt, dessen EPDM-Anteil ca. 27 Gew.-% betrug. Der Glasgehalt wurde nicht analysiert.

### Beispiel 5

Beispiel 1 wurde wiederholt, jedoch wurde als elastomer-modifiziertes PP/EPDM das Reaktorblend PPT 9027 der Hochst AG eingesetzt. Der Glasgehalt wurde nicht analysiert.

Wie oben beschrieben wurden aus den gewonnenen Pellets Prüfkörper gewonnen. Die daran bestimmten Kenndaten sind in Tabelle 2 aufgeführt.

**Tabelle 2**

| Eigenschaft | Einheit | Prüfmethode | Werte für Beispiel 4 | Werte für Beispiel 5 |
|---|---|---|---|---|
| Zugfestigkeit | N/mm² | DIN 53455 | 81 | 84 |
| Zug-E-Modul | N/mm² | DIN 53457 | 8370 | 9190 |
| Reißdehnung | % | DIN 53455 | 2,3 | 2,3 |
| Biegefestigkeit | N/mm² | DIN 53452 | 150 | 154 |
| Biege-E-Modul | N/mm² | DIN 53457 | 9070 | 9770 |
| Kerbschlagzähigkeit Izod | kJ/m² | ISO 180/1 A | - | - |
| Schlagzähigkeit Charpy | kJ/m² | ISO 179/1eU | 68 | 67 |

## Patentansprüche

1. Thermoformbares, faserverstärktes Verbundmaterial mit einem Gehalt von 5 bis 70 Vol.-% an unidirektional ausgerichteten Verstärkungsfasern mit einer Länge von mindestens 3 mm und Einzelfilament-Durchmessern von 7 bis 30 µm, die durch eine Matrix eines thermoplastischen Polymers verbunden sind, das im wesentlichen die gesamte Oberfläche der Einzelfilamente benetzt, dadurch gekennzeichnet, daß das thermoplastische Polymer ein elastomer-modifiziertes Polypropylen ist.

2. Verbundmaterial gemäß Anspruch 1, dadurch gekennzeichnet, daß das elastomer-modifizierte Polypropylen aus einem Blend von Polypropylen mit thermoplastischem Ethylen-Propylen-Dien-Kautschuk (EPDM) und/oder Ethylen-Propylen-Kautschuk (EPM) besteht.

3. Verbundmaterial gemäß Anspruch 2, dadurch gekennzeichnet, daß der Anteil an EPDM und/oder EPM im elastomer-modifizierten Polypropylen 2 bis 40 Gew.-%, vorzugsweise 5 bis 30 Gew.-%, beträgt.

4. Pellets bestehend aus einem Verbundmaterial gemäß Anspruch 1 mit einer Länge von mindestens 3 mm wobei die Länge der Verstärkungsfasern gleich ist der Länge der Pellets.

5. Endlosstränge bestehend aus einem Verbundmaterial gemäß Anspruch 1.

6. Verfahren zur Herstellung eines thermoformbaren, faserverstärkten Verbundmaterials, bei dem man eine Vielzahl von Endlosfäden mit Einzelfilament-Durchmessern von 7 bis 30 µm zur Bildung eines Bandes parallel anordnet und spannt, das Fadenband mit aufgeschmolzenen thermoplastischem Polymer in einem Schmelze-Pultrusionsverfahren imprägniert, wobei man das Fadenband über mindestens 2 beheizte Spreizeroberflächen zieht und man im erstarrenden Fadenband einen Volumenanteil von 5 bis 70 Vol.-% an Endlosfäden einstellt, dadurch gekennzeichnet, daß man als thermoplastisches Polymer ein elastomer-modifiziertes Polypropylen verwendet.

7. Verfahren nach Anspruch 6, dadurch gekennzeichnet, daß man mit einer Schmelze von elastomermodifiziertem Polypropylen imprägniert, die, gemessen bei niedrigen Schergeschwindigkeiten, eine Viskosität von 105 bis 2500 Pa•s aufweist und man die Zugspannung beim Einlaufen in die erste Spreizeroberfläche auf 5 bis 50 N pro 4000 Einzelfilamente einstellt.

8. Verfahren nach Anspruch 7, dadurch gekennzeichnet, daß die Geschwindigkeit des Fadenbandes mindestens 3 m/min beträgt.

9. Verfahren gemäß Anspruch 7, dadurch gekennzeichnet, daß die Zugspannung beim Abziehen des imprägnierten Fadenbandes von der letzten Spreizeroberfläche mindestens 50 N pro 4000 Einzelfilamente beträgt.

10. Verfahren gemäß Anspruch 6, dadurch gekennzeichnet, daß die Geometrie der Spreizeroberflächen so ausgesteuert ist, daß die durch Spreizeroberflächen und einlaufendes Band definierten Zwickel mit Schmelze gefüllt sind.

11. Verwendung des Verbundmaterials gemäß Anspruch 1 zur Herstellung von lackierbaren Formteilen, insbesondere für den Automobilbau.

12. Verwendung der Pellets gemäß Anspruch 4 zur Herstellung von Formteilen durch Spritzgießen, Blasformen, Extrudieren oder Heißpressen oder Mischverfahren davon.

13. Verwendung der Endlosstränge gemäß Anspruch 5 zur Herstellung von gewickelten Formteilen.

14. Verwendung der Pellets gemäß Anspruch 4 in Mischung mit Granulat eines faserfreien Polymers und/oder Granulat von Polymer mit einem Gehalt an Verstärkungsfasern einer Länge von maximal 0,5 mm, wobei das Polymer ausgewählt wird aus der Gruppe von Polypropylen und elastomer-modifiziertem Polypropylen.

## Claims

1. A thermoformable, fiber-reinforced composite material having a content of 5 to 70% by volume of unidirectionally aligned reinforcing fibers having a length of at least 3 mm and individual filament diameters of 7 to 30 µm, which are bonded by a matrix of a thermoplastic polymer which essentially wets the entire surface of the individual filaments, wherein the thermoplastic polymer is an elastomer-modified polypropylene.

2. A composite material as claimed in claim 1, wherein the elastomer-modified polypropylene consists of a blend of polypropylene with thermoplastic ethylene-propylene-diene rubber (EPDM) and/or ethylene-propylene rubber (EPM).

3. A composite material as claimed in claim 2, wherein the proportion of EPDM and/or EPM in the elastomer-modified polypropylene is 2 to 40% by weight, preferably 5 to 30% by weight.

4. A pellet consisting of a composite material as claimed in claim 1 having a length of at least 3 mm, the length of the reinforcing fibers being equal to the length of the pellet.

5. A continuous strand consisting of a composite material as claimed in claim 1.

6. A process for the production of a thermoformable, fiber-reinforced composite material, in which a multiplicity of continuous filaments having individual filament diameters of 7 to 30 µm are arranged in parallel to form a ribbon and tensioned, the filament ribbon is impregnated with molten thermoplastic polymer in a melt pultrusion process, the filament ribbon being drawn over at least 2 heated spreader surfaces and a proportion by volume of 5 to 70% by volume of continuous filaments being established in the solidifying filament ribbon, which comprises using an elastomer-modified polypropylene as the thermoplastic polymer.

7. The process as claimed in claim 6, wherein impregnation is carried out with a melt of elastomer-modified polypropylene which, measured at low shear rates, has a viscosity of 105 to 2500 Pa·s and the drawing tension is set to 5 to 50 N per 4000 individual filaments on entry into the first spreader surface.

8. The process as claimed in claim 7, wherein the speed of the filament ribbon is at least 3 m/min.

9. The process as claimed in claim 7, wherein the drawing tension during the drawing off of the impregnated filament ribbon from the last spreader surface is at least 50 N per 4000 individual filaments.

10. The process as claimed in claim 6, wherein the geometry of the spreader surfaces is adjusted such that the nips defined by spreader surfaces and entering ribbon are filled with melt.

11. The use of the composite material as claimed in claim 1 for the production of paintable molded parts, in particular for automobile construction.

12. The use of the pellets as claimed in claim 4 for the production of molded parts by injection molding, blow molding, extrusion or hot-pressing or mixtures of these processes.

13. The use of the continuous strands as claimed in claim 5 for the production of wound molded parts.

14. The use of the pellets as claimed in claim 4 mixed with granules of a fiber-free polymer and/or granules of polymer having a content of reinforcing fibers of a length of at most 0.5 mm, the polymer being selected from the group comprising polypropylene and elastomer-modified polypropylene.

## Revendications

1. Matériau composite thermoformable renforcé de fibres, avec une teneur de 5 à 70% en volume de fibres de renforcement à orientation unidirectionnelle d'une longueur d'au moins 3 mm et de diamètres de filament individuel de 7 à 30 µm, liées par une matrice d'un polymère thermoplastique qui mouille en substance la totalité de la surface des filaments individuels, caractérisé en ce que le polymère thermoplastique est un polypropylène modifié par élastomère.

2. Matériau composite selon la revendication 1, caractérisé en ce que le polypropylène modifié par élastomère est un mélange de polypropylène et de caoutchouc thermoplastique EPDM (éthylène/propylène/diène) et/ou de caoutchouc EPM (éthylène/propylène).

3. Matériau composite selon la revendication 2, caractérisé en ce que la fraction d'EPDM et/ou d'EPM dans le propylène modifié par élastomère est de 2 à 40% en poids, de préférence de 5 à 30% en poids.

4. Granules constitués d'un matériau composite selon la revendication 1, d'une longueur d'au moins 3 mm, dans lesquelles la longueur des fibres de renforcement est égale à celle des granules.

5. Echeveaux continus constitués d'un matériau composite selon la revendication 1.

6. Procédé pour la préparation d'un matériau composite thermoformable renforcé de fibres, dans lequel un grand nombre de fils continus dont les filaments individuels présentent des diamètres de 7 à 30 µm sont agencés parallèlement et tendus pour former un ruban ; ce ruban de fils est imprégné de polymère thermoplastique fondu par un procédé de fusion-pultrusion dans lequel le ruban de fibres est tiré sur au moins deux surfaces d'écartement chauffantes et l'on ajuste dans le ruban de fils en cours de solidification une proportion volumique de fils continus de 5 à 70% en volume, caractérisé en ce que le polymère thermoplastique utilisé est un polypropylène modifié par élastomère.

7. Procédé selon la revendication 6, caractérisé en ce que l'on opère l'imprégnation avec un polypropylène modifié par élastomère à l'état fondu qui, aux faibles vitesses de cisaillement, présente une viscosité de 105 à 2500 Pa.s et que l'on ajuste la contrainte de traction de 5 à 50 N par 4000 filaments individuels à l'arrivée sur la première surface d'écartement.

8. Procédé selon la revendication 7, caractérisé en ce que la vitesse du ruban de fils est au moins de 3 m/min.

9. Procédé selon la revendication 7, caractérisé en ce que la contrainte de traction lorsque le ruban de fils imprégné est tiré de la dernière surface d'écartement est au moins de 50 N par 4000 filaments individuels.

10. Procédé selon la revendication 6, caractérisé en ce que la géométrie des surfaces d'écartement est sélectionnée de telle manière que les angles définis par surfaces d'écartement et par le ruban entrant soient remplis de matière fondue.

11. Utilisation du matériau composite selon la revendication 1 pour la préparation de pièces usinées à peindre, en particulier pour la construction automobile.

12. Utilisation des granulés selon la revendication 4 pour la fabrication de pièces usinées par injection, par soufflage, par extrusion ou par pressage à chaud, ou par une combinaison de ces procédés.

13. Utilisation des écheveaux continus selon la revendication 5 pour la production de pièces usinées enroulées.

14. Utilisation des granules selon la revendication 4 en mélange avec un granulat d'un polymère sans fibre et/ou un granulat de polymère contenant des fibres de renforcement d'une longueur maximale de 0,5 mm, le polymère étant choisi dans le groupe du polypropylène et du polypropylène modifié par élastomère.
